# EUROPEAN PATENT APPLICATION

(11) **EP 2 547 078 A1**
(43) Date of publication of application: **16.01.2013**
(21) Application number: 11753088.1
(22) Date of filing: 25.01.2011
(51) Int. Cl.: H04M 1/247, H04M 1/00

(54) **TERMINAL DEVICE, METHOD FOR SETTING SAME, AND COMMUNICATION SYSTEM**

(30) Priority: 11.03.2010 JP 2010054448
(71) Applicant: NEC Corporation, Tokyo 108-8001 (JP)
(72) Inventor: MIURA, Nariaki, Tokyo 108-8001 (JP)
(74) Representative: Vossius & Partner
(86) International application number: PCT/JP2011/051299
(87) International publication number: WO 2011/111426

(57) **Abstract**

A terminal device includes reading means and setting means. The reading means reads setup information added to image data from the image data. The setting means implements a setting on the basis of the setup information read by the reading means.

## Description

### Technical Field

The present invention relates to a technique for setting setup information such as a mail transmission/reception setting in a terminal device.

### Background Art

Terminal devices such as cellular phones are becoming smaller and smaller, and increasingly provided with multi-function capabilities in recent years, and since efforts are being made to increase the size of the display screen in a small-sized cabinet, operation input means tends to be limited to a numerical keypad, touch panel or the like.

Furthermore, for the purpose of simplifying the setup work of connecting a terminal device to a wireless network, there is a technique that allows the terminal device to acquire connection setup information for the terminal device to be connected to a wireless LAN from a server device via a network (e.g., see Patent Literatures 1 and 2).

### Citation List

### Patent Literature

Patent Literature 1: JP2005-244936A
Patent Literature 2: JP2006-332863A

### Summary of Invention

### Technical Problem

However, in the aforementioned general terminal device, since the operation input means is limited to a numerical keypad, touch panel or the like, there is a tendency in which it takes time and trouble to input characters.

Furthermore, the multi-function capabilities provided for the terminal device require a user to input and set up many characters in complicated operation for setting items, resulting in a problem in which it takes time and trouble to input character information.

Furthermore, the techniques disclosed in aforementioned Patent Literatures 1 and 2 are intended to automate the connection setup of wireless LAN, but are not intended to go so far as consider allowing the user to recognize the setting through images and to perform automatic setting in the multi-functioned terminal device.

It is an object of the present invention to enable the user to recognize the settings through images and to implement automatic settings without taking time and trouble to input characters in various setting items.

### Means for Solving the Problem

In order to attain such an object, a terminal device according to the present invention includes reading means for reading setup information that is added to image data from the image data and setting means for implementing a setting on the basis of the setup information read by the reading means.

A communication system according to the present invention is configured by including a setup information storage device that stores image data to which setup information is added and the aforementioned terminal device according to the present invention, the setup information storage device and the terminal device being connected together in a wireless or wired manner.

Furthermore, a setting method according to the present invention is a setting method for implementing a setting in a terminal device, the method including the terminal device that reads setup information added to image data from the image data and the terminal device that implements a setting on the basis of the setup information read in the reading step.

Furthermore, a program for a terminal device according to the present invention is a program to cause a computer of the terminal device to execute a reading step of reading setup information that is added to image data from the image data and a setting step of implementing a setting on the basis of the setup information read in the reading step.

### Brief Description of Drawings

Figure 1 is a block diagram illustrating a configuration example of a communication system as an exemplary embodiment.
Figure 2 is a block diagram illustrating a configuration example of a portable terminal as the exemplary embodiment.
Figure 3 is a diagram illustrating an example of embedding setup information in image data.
Figure 4 is a block diagram illustrating a configuration of the portable terminal as setting operation.
Figure 5 is a flowchart illustrating a setting operation of the portable terminal.

### Mode for Carrying Out the Invention

Next, an exemplary embodiment in which a terminal device, a communication system, a setting method and a program for a device according to the present invention are applied to a portable terminal such as a cellular phone will be described in detail using the accompanying drawings.

First, an overview of the present exemplary embodiment will be described.

It is an object of the present exemplary embodiment to allow a terminal having only a small and limited input/output device to easily carry out a complicated setting operation.

Current portable terminals provided with multi-function capabilities have an increasing number of items of setting such as mail destination setting and destination setting for WLAN (Wireless Local Area Network) which is performed by inputting many characters on one hand, and many terminals are provided with a character input function using a numerical keypad or touch panel due to limitation on the terminal size or the like on the other hand. This results in a problem that complicated operation is required for setting items such as a destination setting in which many characters are inputted.

The present exemplary embodiment embeds setup information in an image file and allows a portable terminal to acquire the embedded image through downloading or the like, analyze the acquired image file to thereby implement a setting.

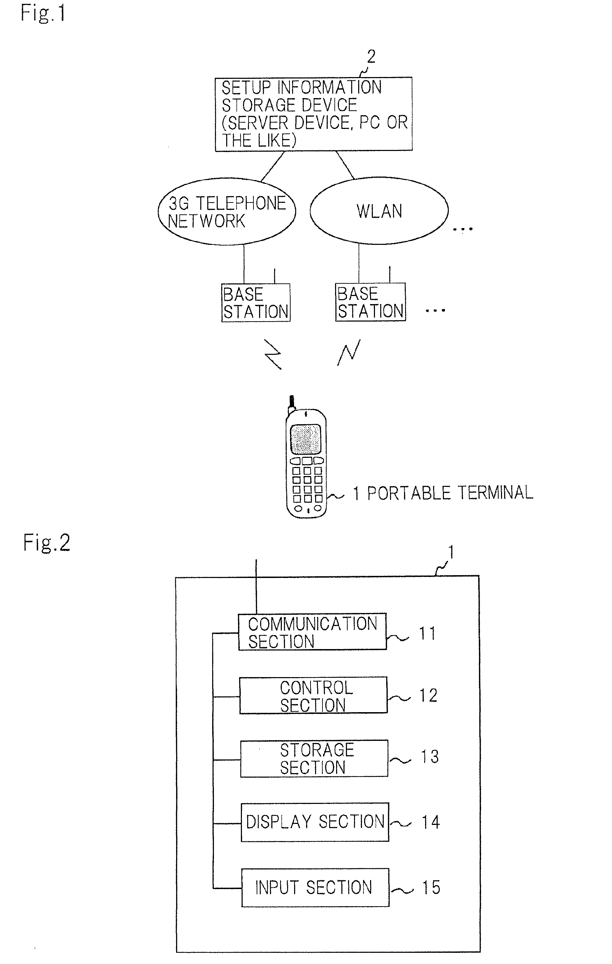

Next, a configuration of a communication system including a portable terminal as the present exemplary embodiment will be described. Figure 1 is a block diagram illustrating a configuration example of the communication system as an exemplary embodiment.

In the communication system, as in the present exemplary embodiment, portable terminal 1 is configured so as to be connectable to setup information storage device 2 such as a server device or PC as shown in Figure 1. Examples of connection means include various wireless or wired means such as a 3G telephone network, infrared radiation, non-contact IC card technique (proximity type wireless communication) such as Felica, and WLAN.

Setup information storage device 2 stores image data in which setup information is embedded.

By accessing setup information storage device 2, portable terminal 1 can acquire image data stored therein through downloading or the like.

Next, a configuration of the portable terminal as the present exemplary embodiment will be described. Figure 2 is a block diagram illustrating a configuration example of the portable terminal as in the exemplary embodiment.

As shown in Figure 2, portable terminal 1, as in the present exemplary embodiment, is configured by including communication section 11, control section 12 that controls the entire device, storage section 13 that stores setup information or the like, display section 14 such as a display screen and input section 15 that receives operation input from a user.

The sections shown in Figure 2 will be described below.

Communication section 11 transmits/receives image data using, for example, a 3G telephone network, infrared radiation, non-contact IC card technique such as Felica, WLAN or the like.

Control section 12 extracts setup information embedded in a received image. This control section 12 is a function realized by a CPU performing processing based on software.

Suppose input section 15 is limited input means such as a numerical keypad or touch panel, and not provided with any keyboard for character input.

Since a conversation function as a cellular phone and an information processing function as a portable terminal are publicly known, descriptions thereof will be omitted.

Next, operation of the present exemplary embodiment will be described using a specific example.

A case will be described in the following example where an SMTP (Simple Mail Transfer Protocol) server and a POP (Post Office Protocol) server are set up to enable portable terminal 1 to carry out a mail application.

This example illustrates a case where a user subscribes to a service from a new provider and sets up an SMTP server and a POP server of the provider in a cellular phone so as to use mail of the provider not only from a PC but also from the cellular phone.

First, setup information storage device 2 which is the supplier side of setup information will be described.

An administrator of the provider, a user or the like provides an image in which setup information is embedded beforehand and stores it in setup information storage device 2. This allows the image to be downloaded as an image from a web site (setup information storage device 2) of the provider or transferred from a PC (setup information storage device 2).

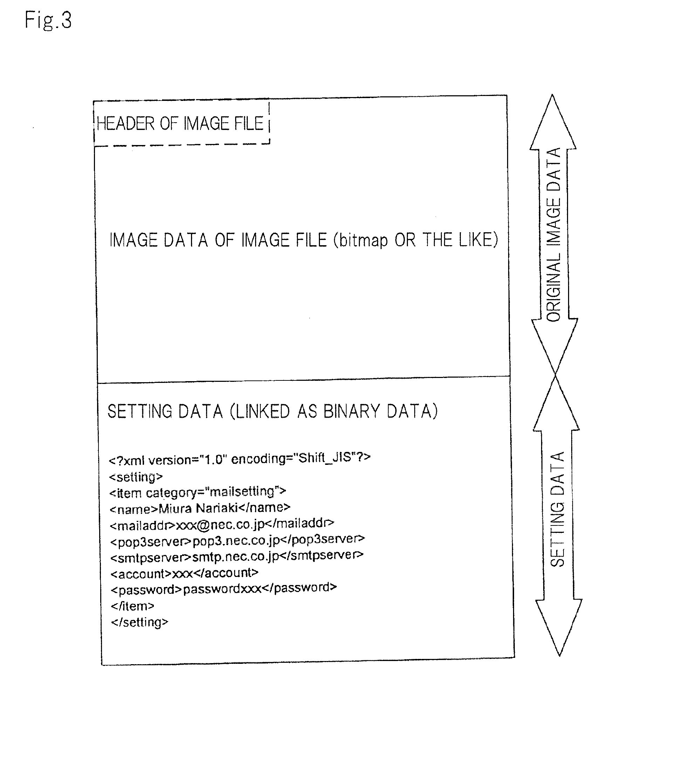

An example of a method of embedding the setup information in image data will be described. In an example in Figure 3, the setup information is linked after normal image file data as binary data. This setup information is written in XML (Extensible Markup Language), linked at the end of JPEG image data as binary data and installed.

The example in Figure 3 illustrates a case where the mail address is xxx@nec.co.jp and the pop3 server is pop3.nec.co.jp.

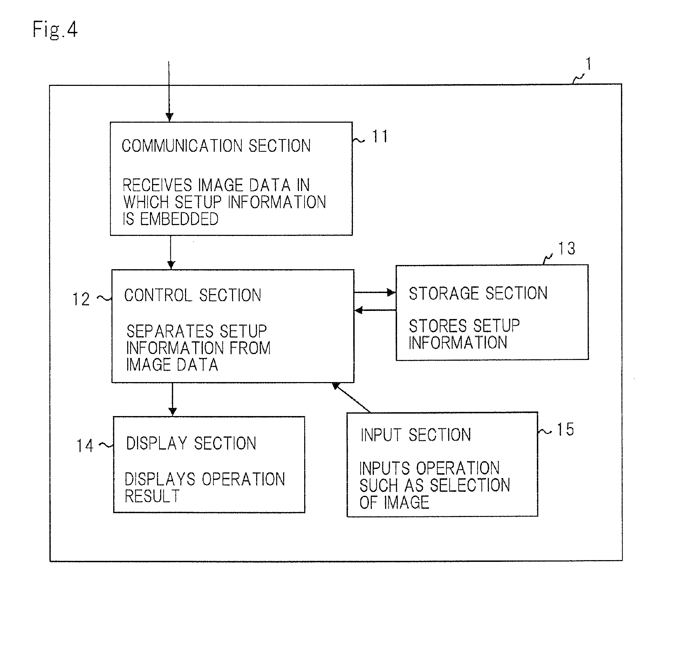

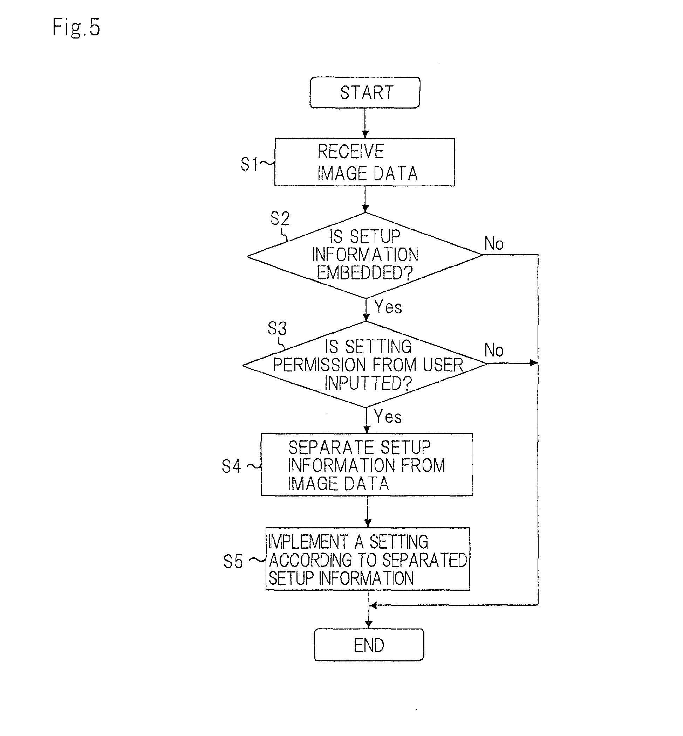

Next, operation of portable terminal 1 which is the receiving side of the setting image will be described with reference to Figure 4 and Figure 5.

First, when communication section 11 receives image data (step S1), control section 12 determines whether or not setup information is embedded in the image (step S2).

In this determination, when the setup information is embedded in the image data as in the aforementioned example in Figure 3, for example, a method may be adopted whereby control section 12 searches for a <setting> tag from the tail end of the image data and determines, if the tag is found, that the data is a file in which the setting is embedded or determines, if the tag is not found, that the data is a file in which the setting is not embedded. The search target is not limited to the <setting> tag but may be other determinable tags.

Upon determining that the data is a file in which setup information is embedded, control section 12 causes display section 14 to display a menu "Will you get it set up?" or the like, waits for an input from the user to permit setting items, and when "Set" is selected, control section 12 separates the setup information from the image data (step S4), and applies the setup information written in XML to the setting of the mail application (step S5).

When the setting is selected, elements defined by various tags are set by predetermined association such as a name element associated with the user name, a mailaddr element associated with the mail address and pop3server associated with the Pop3 server.

As described above, according to the aforementioned exemplary embodiment, the following effects can be obtained.

As a first effect, even with a limited input/output device such as a 2-inch screen or numerical keypad of a normal cellular phone, a mail application or the like can only be set by operating an image file. Therefore, it is possible to omit a conventional character input operation that requires several tens of characters.

Since portable terminals conventionally have limited communication means and are provided with no WLAN or POP3 setting, even now the standard way to input a WLAN or POP3 setting or the like is via a manual operation. According to the present exemplary embodiment, such detailed various setting items can be inputted in a simple manner.

As a second effect, since setup information is embedded in an image file and data in image portions is not modified, by embedding the setup information in the image associated with the setting target as described above, it is possible to make it easy for the user to understand and to recognize steps to take for setting target items that can be automatically carried out.

That is, usability can be improved by taking advantage of the fact that the original image of the image data in which the setup information is embedded can be anything and allowing the user to easily recognize the kind of setting for which the image is used. For example, in the case of an image in which setup information for a mail setting is embedded, using an image with a mail icon and a provider name designed thereon will allow the user to see the image with the setup information added thereto and intuitively manage/operate it.

As a third effect, the image data in which the setup information is embedded is provided with setup information but since it is an image file seen from each device, the image data can be handled as a normal image by PCs, cellular phones, servers or the like that are prevalent in the market today. For this reason, transfer means for image data is not limited to mail or downloading with HTTP, but any kind of transfer means used for image files (e.g., non-contact IC card communication such as Felica, saving the file in a card type non-volatile recording medium such as a micro SD and manually delivering it or communication using wired connection such as USB) can be used. Thus, the invention can also be suitably used for communication-related setting such as WLAN or mail setting.

As a fourth effect, since setting an item is carried out by operating an image file, it is possible to easily select or set an image by operating only a touch panel, operating only direction keys and an Enter key or operating only a jog dial. For this reason, it is possible to simplify the operation input mechanism in portable terminal 1 and reduce the size of the terminal.

The aforementioned exemplary embodiment is an exemplary embodiment, and the present invention is not limited to this, but can be implemented modified in various modes based on the technology of the present invention.

For example, for the file in which the setup information is embedded in the determination in aforementioned step S2 in Figure 5, a configuration may be adopted in which control section 12 evaluates whether or not the setup information portion is correct as an XML format to thereby prevent mismatch.

Furthermore, if a plurality of mail accounts can be set in portable terminal 1, when selection input from the user is received in step S3 in Figure 5, a configuration may also be adopted in which a setting destination account is selected or a screen for prompting overwrite of the setting is displayed in order to set an item that corresponds to the operation input.

Furthermore, a configuration may also be adopted in which when the setup information that is embedded in the received image data includes elements not supported by portable terminal 1, those elements are ignored.

Furthermore, to further guarantee the authenticity of XML data as regards the setup information embedded in the image data, there may be a configuration using DTD (Document Type Definition) for the XML data section.

Furthermore, an item that receives user input may be provided in part of the setup information embedded in image data. As an example of installing an item, an item may be installed as a user input target item if "userinput" is specified in the data of the XML element illustrated in Figure 3, or the item may be installed as a normal item to be set if "user input" is not specified.
• Description example 1 (when default value is present):
   <name data = "userinput"> default contents </name>
• Description example 2 (when default value is not present):
   <name data = "userinput"/>
Furthermore, the aforementioned exemplary embodiment has described the target item that is to be set as a mail application, but the present invention is not limited to setting this target item, and the present invention can likewise be applied to various items in the device that are to be set.

In particular, the present invention is preferably applicable to a WLAN setting which includes many input items, user-set kana/kanji conversion dictionary (input character and conversion candidate are paired as setting item), proxy server setting, APN (Access Point Name) setting or the like.

As an example that is used in this case, when an image in which setup information of WLAN and Proxy settings are made on the spot, is sent to the terminal device using non-contact IC card communication such as Felica at a hot spot or the like, and settings of WLAN and Proxy are performed on the spot, the hot spot is simply made available by only performing non-contact IC card communication and setting using an image.

Furthermore, a configuration may also be adopted in which control section 12 of terminal device 1 is provided with a function of generating image data in which the setup information is embedded based on various kinds of setup information and communication section 11 can send the image data by radio communication.

According to this configuration, when, for example, the user prefers to transfer the same setup information to a new model, it is possible to transfer the setting to any model as long as it is likewise provided with the setting function using image data according to the present exemplary embodiment that uses the image data, and to use the model in the same way as the portable terminal before the change.

For this reason, the user can use the function of the present exemplary embodiment for the purpose of backing up or transferring the setup information.

Furthermore, without being limited to the configuration in which data is displayed on display section 14, a configuration may also be adopted in which data is printed out by a printing device that is built into the device or that is external to the device.

Furthermore, although the aforementioned exemplary embodiment has been described assuming that setup information is embedded in image data, various kinds of adding methods may be adopted such as attachment of a setup information file as long as the setup information can be added to the image data.

Furthermore, by recording the processing steps for implementing the terminal device as in the aforementioned exemplary embodiment in a recording medium as a program, it is possible to realize the aforementioned functions according to the exemplary embodiment by causing a CPU of a computer that constitutes the system to execute the processing according to the program supplied from the recording medium.

In this case, the present invention is also applicable to a case where an information group that includes the program is supplied from an external recording medium to an output device via the above-described recording medium or a network.

That is, a program code itself read from the recording medium realizes a new function of the present invention and the recording medium that stores the program code and a signal read from the recording medium constitute the present invention.

For example, a hard disk, optical disk, magneto-optical disk, floppy (registered trademark) disk, magnetic tape, non-volatile memory card, ROM or the like may be used as this recording medium.

According to the program according to the present invention, it is possible to cause a terminal device under the control of the program to realize the functions of the aforementioned exemplary embodiment.

### [Supplementary notes]

The whole or part of the exemplary embodiment disclosed above can be described as, but not limited to, the following supplementary notes.

### [Supplementary note 1]

A terminal device comprising:
reading means for reading setup information, which is added to image data, from the image data; and
setting means for implementing a setting on the basis of the setup information read by said reading means.

### [Supplementary note 2]

The terminal device according to Supplementary note 1, further comprising determining means for determining whether or not the setup information has been added to the image data,
wherein said reading means reads the setup information when said determining means determines that the setup information has been added.

### [Supplementary note 3]

The terminal device according to Supplementary note 2, further comprising receiving means for receiving image data,
wherein said determining means performs the determination on the image data received by said receiving means.

### [Supplementary note 4]

The terminal device according to any one of Supplementary notes 1 to 3, further comprising:
setup information adding means for adding setup information that can be set by said setting means to image data; and
transmitting means for transmitting the image data to which the setup information has been added by said setup information adding means.

### [Supplementary note 5]

The terminal device according to any one of Supplementary notes 1 to 4, wherein the setup information is added to the image data by linking and embedding the setup information to/in the image data as binary data.

### [Supplementary note 6]

A communication system comprising:
a setup information storage device for storing image data to which setup information has been added; and
the terminal device according to any one of notes 1 to 5, the setup information storage device and the terminal device being connected together in a wireless or wired manner.

### [Supplementary note 7]

A setting method for implementing a setting in a terminal device, the method comprising:
reading, in which said terminal device reads setup information added to image data from the image data; and
setting, in which said terminal device performs setting on the basis of the setup information read in said reading.

### [Supplementary note 8]

The setting method according to Supplementary note 7, further comprising determining, in which said terminal device determines whether or not setup information has been added to image data,
wherein in said reading, the setup information is read when the setup information is determined to have been added in said determining.

### [Supplementary note 9]

The setting method according to Supplementary note 8, further comprising receiving, in which said terminal device receives image data,
wherein in said determining, the determination is made on the image data received in said receiving.

### [Supplementary note 10]

The setting method according to any one of Supplementary notes 7 to 9, wherein the setup information is added to the image data by linking and embedding the setup information to/in the image data as binary data.

### [Supplementary note 11]

A setting transfer method for transferring a setting of a terminal device, the method comprising:
a setup information adding step of said terminal device adding setup information to image data; and
a transmitting step of said terminal device transmitting image data to which setup information is added in said setup information adding step.

### [Supplementary note 12]

The setting transfer method according to Supplementary note 11, wherein the setup information is added to the image data by linking and embedding the setup information to/in the image data as binary data.

### [Supplementary note 13]

A program for a terminal device for causing the terminal device to execute:
a reading procedure of reading setup information added to image data from the image data; and
a setting procedure of implementing a setting on the basis of the setup information read in said reading procedure.

### [Supplementary note 14]

The program for a terminal device according to Supplementary note 13, further causing said terminal device to execute a determining procedure of determining whether or not setup information has been added to image data,
wherein when setup information is determined to have been added in said determining procedure, the setup information is read in said reading procedure.

### [Supplementary note 15]

The program for a terminal device according to Supplementary note 14, further causing said terminal device to execute a receiving procedure of receiving image data,
wherein in said determining procedure, the determination is made on the image data received in said receiving procedure.

### [Supplementary note 16]

A program for a terminal device for causing the terminal device to execute:
a setup information adding procedure of adding setup information to image data; and
a transmitting procedure of transmitting the image data to which the setup information has been added in said setup information adding procedure.

### [Supplementary note 17]

The program for terminal device according to any one of Supplementary notes 13 to 16, wherein the setup information is added to the image data by linking and embedding the setup information to/in the image data as binary data.

The present invention has been described so far with reference to the exemplary embodiment, but the present invention is not limited to the exemplary embodiment. Various modifications understandable to those skilled in the art can be made to the configuration and details of the present invention defined in the claims without departing from the scope of the present invention.

The present application claims priority based on Japanese Patent Application No.2010-054448, filed on March 11, 2010, the disclosure of which is incorporated herein by reference in its entirety.

## Claims

1. A terminal device comprising:
reading means for reading setup information, which has been added to image data, from the image data; and
setting means for implementing a setting on the basis of the setup information read by said reading means.

2. The terminal device according to claim 1, further comprising determining means for determining whether or not the setup information has been added to the image data,
wherein said reading means reads the setup information when said determining means determines that the setup information has been added.

3. The terminal device according to claim 2, further comprising receiving means for receiving image data,
wherein said determining means performs the determination on the image data received by the receiving means.

4. The terminal device according to any one of claims 1 to 3, further comprising:
setup information adding means for adding setup information that can be set by said setting means to image data; and
transmitting means for transmitting the image data to which the setup information is added by said setup information adding means.

5. The terminal device according to any one of claims 1 to 4, wherein the setup information is added to the image data by linking and embedding the setup information to/in the image data as binary data.

6. A communication system comprising:
a setup information storage device for storing image data to which setup information has been added; and
the terminal device according to any one of claims 1 to 5, connected to said setup information storage device in a wireless or wired manner.

7. A setting method for implementing a setting in a terminal device, the method comprising:
reading, in which the terminal device reads setup information added to image data from the image data; and
setting, in which the terminal device implements a setting on the basis of the setup information read in said reading.

8. A program for a terminal device for causing a computer of the terminal device to execute:
a reading procedure of reading setup information added to image data from the image data; and
a setting procedure of implementing a setting on the basis of the setup information read in said reading.
